(19) **Europäisches Patentamt / European Patent Office / Office européen des brevets**

(11) **EP 1 705 458 B1**

(12) **EUROPEAN PATENT SPECIFICATION**

(45) Date of publication and mention of the grant of the patent:
**25.06.2008 Bulletin 2008/26**

(51) Int Cl.:
***G01C 21/16*** (2006.01)

(21) Application number: **05006689.3**

(22) Date of filing: **26.03.2005**

(54) **Inertial- and vehicle dynamics based autonomous navigation**

Trägheits- und Fahrzeugdynamik basierte autonome Navigation

Navigation autonome basée sur dynamique inertielle et la dynamique de marche d'un véhicule

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**27.09.2006 Bulletin 2006/39**

(73) Proprietor: **SAAB AB**
**581 88 Linköping (SE)**

(72) Inventor: **Hagstedt, Anders**
**589 21 Linköping (SE)**

(74) Representative: **Holmberg, Magnus et al**
**Albihns Stockholm AB**
**P.O. Box 5581**
**114 85 Stockholm (SE)**

(56) References cited:
**CA-A1- 2 465 233**

Printed by Jouve, 75001 PARIS (FR)

**Description**

THE BACKGROUND OF THE INVENTION AND PRIOR ART

The present invention relates generally to robust navigation solutions for crafts and vehicles. More particularly the invention relates to a navigation apparatus according to the preamble of claim 1 and a navigation method according to the preamble of claim 10. The invention also relates to a computer program according to the preamble of claim 19 and a computer readable medium according to the preamble of claim 20.

In the last decades, navigation systems have been developed which facilitate the determination of a vehicle's position dramatically compared to the earlier known methods. In most cases, these navigation systems determine positions on basis of accurate radio signals received from a plurality of satellites, and are commonly referred to as global navigation satellite systems (GNSS:s).

An inertial measurement system (INS) may provide an alternative, or complementary, means to navigate. The INS registers relative movements of a craft onto which it is mounted. Based on these movements conclusions may be drawn as to the craft's speed and course. Provided that certain initial conditions are known, such as a starting position and an initial speed, it is also possible to produce updated position information for the craft. The INS normally contains an inertial measurement unit (IMU), which in turn includes accelerometers and rate gyros. The accelerometers measure specific forces, which are translated into a known coordinate frame with aid of angular measurements performed by the rate gyros. Newton's laws of motion are then applied to generate velocity and attitude information. Based on output data from the IMU, a processing unit in the INS may produce relevant velocity vectors and repeatedly generate position indications for the vehicle carrying the INS.

Today's high-precision IMU:s render it possible to design an INS which produces very accurate position data over relatively short distances and times. However, over longer distances and/or time intervals, these systems have a tendency of drifting in the position estimations. This is an effect of errors being accumulated in the navigation process. Therefore, to enable repeated calibration of the INS, this system is normally aided by one or more auxiliary systems, such as a GNSS receiver or an altimeter.

A GNSS receiver is generally capable of providing high performance at a comparatively low cost. Nevertheless, at least for military applications, such an auxiliary system is undesirable because the GNSS receiver is sensitive to jamming and spoofing. The design also becomes dependant on the GNSS operator, and is therefore unreliable in conflict situations.

An altimeter, for instance based on radar or laser measurements, may also be used to reduce the maximal INS's navigation errors substantially. Namely, after having performed turns in the horizontal plane any attitude related errors of the INS may become observable, and the altimeter renders it possible to compensate for such errors. Nevertheless, these types of altitude measurements are associated with several problems. In order to be useful, either the elevation of the terrain relative to a reference level (e.g. the mean sea level) must be known from an on-board database, or the measurements must be made at locations where the terrain elevation is known, i.e. over open water. Moreover, in military applications, any signal emission increases the risk that the enemy detects the vehicle. Therefore, if possible, use of radars, lasers or other active sensors should be avoided.

Consequently, today it appears necessary to choose between measurement accuracy and stealth/independence. Namely, the known high-precision navigation solutions either rely on received external signals (e.g. from a GNSS) and/or rely on emitted signals (e.g. radar or laser signals), whereas the strictly INS based solutions suffer from error-accumulation related drift problems, which over time, severely deteriorates the navigation accuracy.

CA 2465233 describes a navigation system for determining the course of a vehicle. The navigation system comprises a main sensor system for measuring status variables describing the vehicle state and an auxiliary sensor system for measuring an additional status variable. A navigation core is arranged to estimate error minimized status variables on basis of the measured status variables. The navigation core comprises a vehicle model that predicts the status variables of the vehicle and an error estimator that predicts the estimation errors made by the vehicle model and a correction element that corrects the predicted status variables by means of the predicted estimation error.

The U.S. patent No. 5,841,537 describes an inertial reference system for determining the attitude and rate of change of attitude of a vehicle, wherein a redundancy of the inertial reference system is accomplished by replacement of a fiber optic gyroscope (FOG) with a low-cost reference IMU. Then, the information that should have been provided by the thus eliminated gyroscope is instead synthesized from the output of the remaining gyroscopes and the output of the low-cost reference IMU. Although such redundancy may reduce the error propagation in the system, the design still suffers from the above-mentioned error accumulation.

SUMMARY OF THE INVENTION

The object of the present invention is therefore to alleviate the problems above.

According to one aspect of the invention this object is achieved by the initially described navigation apparatus, wherein the apparatus includes a vehicle modeling unit, which is adapted to receive the estimated navigation data, and a model vector describing the vehicle dynamics of the vehicle. The vehicle modeling unit produces a second estimated acceleration vector for the vehicle based on the model vector, the estimated navigation data and at least one adaptive model. Moreover, the error estimation unit is adapted to produce the first navigation error signal on the further basis of the second estimated acceleration vector; produce a second navigation error signal based on the first and second estimated acceleration vectors; and feed back the second navigation error signal to the vehicle modeling unit for updating the at least one adaptive model.

An important advantage attained by this apparatus is that the vehicle dynamics influences the navigation data produced by the INS. This, in turn, enhances the quality of the data and introduces a degree of redundancy, which makes the design robust and reliable.

According to a preferred embodiment of this aspect of the invention, the at least one adaptive model includes a thrust model, which describes a behavior of a propulsion system of the vehicle, and an aerodynamic model, which describes the aerodynamic properties of the vehicle. Thereby, the key factors that affect the vehicle's behavior during operation may be taken into account when determining a current navigation data for the vehicle.

According to another preferred embodiment of this aspect of the invention, the vehicle is presumed to be an aircraft, and the model vector includes data that describes the flap angles, the elevator angles, the rudder angles, the spoiler angles, the engine thrusts of this craft, and/or the temperature and/or the pressure of the air that surrounds the craft. Such a model vector is advantageous because it quantifies a set of parameters which characterize the craft's settings and environment.

According to a preferred embodiment of this aspect of the invention, the apparatus includes a wind estimation unit that is adapted to estimate a wind vector, which describes a wind experienced by the vehicle. Further, the vehicle modeling unit is adapted to receive the wind vector and produce a second estimated acceleration vector on the further basis of the wind vector. Consequently, the wind vector also influences the acceleration parameter produced by the vehicle modeling unit. This further improves the navigation data quality.

According to a further preferred embodiment of this aspect of the invention, the error estimation unit is adapted to produce a third navigation error signal based on the first and second estimated acceleration vectors, and feed back the third navigation error signal for updating the estimated wind vector. Thereby, a feedback loop is closed also in respect of the wind vector estimation. This renders it possible to continuously improve the wind estimation algorithm.

According to yet another preferred embodiment of this aspect of the invention, the navigation apparatus is associated with an auxiliary navigation apparatus, which is adapted to provide at least one calibration signal to the error estimation unit. Moreover, the error estimation unit is adapted to adjust the first and second navigation error signals, and possibly also the third navigation error signal in response to the at least one calibration signal from the auxiliary navigation apparatus. The auxiliary navigation apparatus preferably includes an active sensor through which geographical reference measurements can be performed, at least occasionally. Hence, the proposed main navigation apparatus may be repeatedly calibrated.

According to still another preferred embodiment of this aspect of the invention, the auxiliary navigation apparatus includes a GNSS-receiver, which is adapted to receive a set of external navigation signals, and based thereon produce a first source reference signal. The auxiliary navigation apparatus also includes a prediction unit, which is adapted to receive the estimated navigation data, and based thereon produce a first predicted reference signal. A first summation unit in the auxiliary navigation apparatus is adapted to generate one of said at least one calibration signal in response to the first source reference signal and the first predicted reference signal. Thereby, the accuracy of the calculations made by the error estimation unit can be improved significantly.

According to a preferred embodiment of this aspect of the invention, the auxiliary navigation apparatus includes an altimeter, which is adapted to measure a second source reference signal representing an elevation parameter in respect of the vehicle. Furthermore, a second summation unit in the auxiliary navigation apparatus is adapted to generate one of said at least one calibration signal in response to the second source reference signal and an altitude estimate generated by the inertial measurement system. Again, this significantly improves the accuracy of the calculations made by the error estimation unit.

According to another aspect of the invention this object is achieved by the initially described navigation method, wherein the estimated navigation data and a model vector describing the vehicle dynamics of the vehicle are received. A second estimated acceleration vector for the vehicle is then produced based on the model vector, the estimated navigation data and at least one adaptive model. The method also involves producing the first navigation error signal on the further basis of the second estimated acceleration vector; producing a second navigation error signal based on the first and second estimated acceleration vectors; and feeding back the second navigation error signal to the vehicle modeling unit for updating the at least one adaptive model.

This method is advantageous, since thereby the vehicle dynamics influences the navigation data that are produced by the INS. This, in turn, enhances the quality of the data and introduces a degree of redundancy, which makes the strategy robust and reliable.

According to a preferred embodiment of this aspect of the invention, the at least one adaptive model includes a thrust model describing a behavior of a propulsion system of the vehicle, and an aerodynamic model describing the aerodynamic properties of the vehicle. Namely, these models describe key factors that affect the vehicle's behavior during operation, and therefore influence the determination of a current position for the vehicle.

According to another preferred embodiment of this aspect of the invention, it is presumed that the vehicle is an aircraft, and the model vector contains data that describes the flap angles, the elevator angles, the rudder angles, the spoiler angles, the engine thrusts of the craft and/or the temperature and/or the pressure of the air which surrounds the craft. Such a model vector is advantageous because it quantifies a set of parameters which characterize the craft's settings and environment.

According to yet preferred embodiment of this aspect of the invention, the method involves estimating a wind vector that describes a wind experienced by the vehicle, and producing a second estimated acceleration vector on the further basis of the wind vector. Hence, the wind vector also influences the acceleration parameter produced by the vehicle modeling unit. This further improves the navigation data quality.

According to a further preferred embodiment of this aspect of the invention, the method involves producing a third navigation error signal based on the first and second estimated acceleration vectors, and feeding back the third navigation error signal for updating the estimated wind vector. This closes a feedback also in respect of the wind vector estimation, as a result it is possible to continuously improve the wind estimation algorithm.

According to still another preferred embodiment of this aspect of the invention, the method involves receiving at least one calibration signal representing data derived from at least one information source which is independent from the vehicle; and adjusting the first and second navigation error signals, and possibly also the third navigation error signal in response to the at least one calibration signal. Thereby, geographical reference measurements can be performed, at least occasionally, and thus repeatedly allow calibration of the navigation procedure.

According to a further preferred embodiment of this aspect of the invention, the method involves receiving a set of external navigation signals; producing a first source reference signal based on the set of external navigation signals; producing a first predicted reference signal based on the estimated navigation data; and generating one of said at least one calibration signals in response to the first source reference signal and the first predicted reference signal.

According to a further aspect of the invention these objects are achieved by a computer program directly loadable into the internal memory of a computer, comprising software for controlling the above proposed navigation method when said program is run on a computer.

According to another aspect of the invention these objects are achieved by a computer readable medium, having a program recorded thereon, where the program is to make a computer control the above proposed navigation method.

Thereby, the invention offers a navigation solution for critical applications wherein both a high accuracy and a high reliability is desired, and at the same time, independence from any artificially generated external inputs is required. Consequently, the invention is well suited for military applications, such as fighter aircrafts, unmanned aerial vehicles (UAV:s) and missiles.

Further advantages, advantageous features and applications of the present invention will be apparent from the following description and the dependent claims.

BRIEF DESCRIPTION OF THE DRAWINGS

The present invention is now to be explained more closely by means of preferred embodiments, which are disclosed as examples, and with reference to the attached drawings.

Figure 1    shows a vehicle in relation to coordinate systems and vectors that are representative for the solution according to the invention,

Figure 2    shows a block diagram over a navigation apparatus according to a first embodiment of the invention,

Figure 3    shows a block diagram over a navigation apparatus according to a second embodiment of the invention, and

Figure 4    illustrates, by means of a flow diagram, a general method of producing navigation data according to the invention.

DESCRIPTION OF PREFERRED EMBODIMENTS OF THE INVENTION

In order to explain the mechanisms on which the present invention is based, we will start by discussing the physical conditions that influence a moving vehicle, e.g. an aircraft travelling through the air space. We will also describe the interrelationships between some of the parameters that can be calculated by an on-board INS and a model describing the vehicle dynamics of a vehicle, as well as error estimations of these parameters and this model.

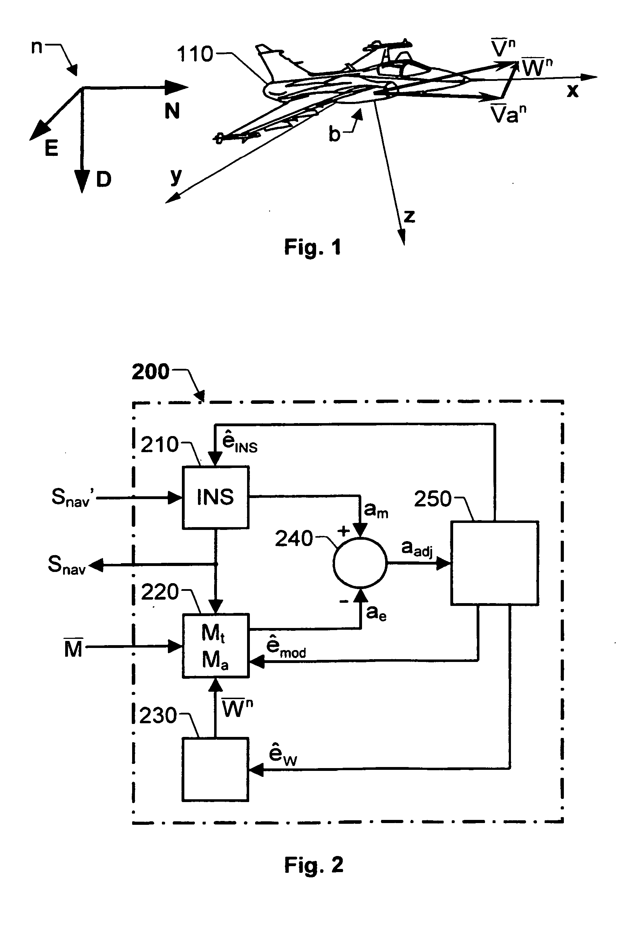

Figure 1 shows a vehicle 110 in relation to a body-fixed coordinate system b having coordinate axes: x, y and z expressing a front, right and down direction respectively of the vehicle 110. A geographical coordinate system n having coordinate axes: N, E and D expresses an absolute position for the vehicle 110 in terms of geographical north, east and elevation parameters respectively (typically represented by a longitude, a latitude and an altitude above the mean sea level).

We assume that the vehicle 110 travels at a speed $\overline{V}^n$ relative to the ground, where:

$$\overline{V}^n = \begin{bmatrix} V_N \\ V_E \\ V_D \end{bmatrix}$$

is a vector having a north component $V_N$, an east component $V_E$ and an elevation component $V_D$ in relation to the geographical coordinate system n.

The vehicle's 110 orientation relative to the geographical coordinate system n may be expressed by means of a transformation matrix $C^b_n$, where:

$$C^b_n = \begin{bmatrix} C_{11} & C_{12} & C_{13} \\ C_{21} & C_{22} & C_{23} \\ C_{31} & C_{32} & C_{33} \end{bmatrix},$$

and $C_{11}$, $C_{12}$, $C_{13}$, $C_{21}$, $C_{22}$, $C_{23}$, $C_{31}$, $C_{32}$ and $C_{33}$ represent conversion coefficients from the geographical coordinate system n to the body-fixed coordinate system b.

The vehicle 110 has a velocity vector:

$$\overline{Va}^n = \begin{bmatrix} Va_N \\ Va_E \\ Va_D \end{bmatrix}$$

relative to the air space.

The figure 1 also shows a wind vector:

$$\overline{W}^n = \begin{bmatrix} W_N \\ W_E \\ W_D \end{bmatrix},$$

which is presumed to have a north component $W_N$, an east component $W_E$ and a vertical component $W_D$ (i.e. in the elevation direction D towards/from the ground surface). The wind vector $\overline{W}^n$ may be regarded as an adjustment parameter between the (absolute) speed $\overline{V}^n$ and the air related velocity vector $\overline{Va}^n$. Consequently, the velocity vector $\overline{Va}^n$ may also be expressed as:

$$\overline{Va}^n = \overline{V}^n - \overline{W}^n = \begin{bmatrix} V_N - W_N \\ V_E - W_E \\ V_D - W_D \end{bmatrix}$$

in the geographical coordinate system n.

Hence, an air related velocity Va is obtained as:

$$Va = \sqrt{Va_N^2 + Va_E^2 + Va_D^2}$$

Relative wind directions $\alpha$ and $\beta$ of the air related velocity vector $\overline{Va}^n$ with respect to the vehicle 110 can be calculated from an air related velocity $\overline{Va}^b$ expressed in the body-fixed coordinate system b, i.e.:

$$\overline{Va}^b = \begin{bmatrix} Va_x \\ Va_y \\ Va_z \end{bmatrix} = C_n^b \overline{Va}^n,$$

$$\text{where} \quad \alpha = \arctan\left(\frac{Va_z}{Va_x}\right) \quad \text{and} \quad \beta = \arctan\left(\frac{Va_y}{\sqrt{Va_x^2 + Va_z^2}}\right).$$

Turning now to figure 2, we see a block diagram over a navigation apparatus 200 according to a first embodiment of the invention.

The apparatus 200 is adapted to be mounted in a vehicle, such as the aircraft 110 in the figure 1, a UAV or a missile. Nevertheless, according to the invention, the vehicle may equally well be any kind of alternative air, land or water based vehicle.

Provided that data $S_{nav}'$ is entered that specifies a known initial navigation state in terms of position, velocity and orientation of the vehicle's body-fixed coordinate system b with respect to the geographical coordinate system n, the apparatus 200 generates estimated updated navigation data $S_{nav}$ describing the vehicle's geographical position, velocity and orientation as the vehicle travels from the initial position.

According to the invention, the apparatus 200 includes an inertial measurement system (INS) 210, a vehicle modeling unit 220 and an error estimation unit 250. The INS 210 registers acceleration and angular velocity parameters in three dimensions in respect of the body-fixed coordinate system associated with the vehicle. Based on the registered parameters, the INS 210 produces a first estimated acceleration vector $a_m$ for the vehicle. More important, however, given the first estimated acceleration vector $a_m$ and the known initial navigation state $S_{nav}'$ the INS 210 also generates the estimated updated navigation data $S_{nav}$ in terms of position, velocity and orientation of the vehicle relative to the geographical coordinate system n.

The vehicle modeling unit 220 receives the navigation data $S_{nav}$ and a model vector $\overline{M}$. This vector describes the vehicle dynamics of the vehicle onto which the apparatus 200 is mounted. Based on the model vector $\overline{M}$, the navigation data $S_{nav}$ and at least one adaptive model $M_t$, $M_a$ the modeling unit 220 produces a second estimated acceleration vector $a_e$ for the vehicle.

Provided that the vehicle onto which the apparatus 200 is mounted is an aircraft, the model vector $\overline{M}$ may include data describing the flap angles, the elevator angles, the rudder angles, the spoiler angles and/or the engine thrusts of the vehicle. It is also advantageous if the model vector $\overline{M}$ specifies an ambient air temperature and/or an ambient air pressure. Of course, if the vehicle is land or water based it is advantageous to include a different set of parameters in the model vector $\overline{M}$.

Preferably, a summation module 240 is included in the apparatus 200 to receive the acceleration vectors $a_m$ and $a_e$, and in response thereto generate a resulting composite estimated acceleration vector $a_{adj}$, for instance: $a_{adj} = a_m - a_e$. The error estimation unit 250 receives the composite estimated acceleration vector $a_{adj}$. The unit 250 may include a processor that implements a Kalman filter, which is adapted to estimate any error sources and error quantities of the INS 210 and the vehicle modeling unit 220, and in order to enable compensation for such errors, produce signals $\hat{e}_{INS}$ and $\hat{e}_{mod}$. Specifically, the error estimation unit 250 produces a first navigation error signal $\hat{e}_{INS}$ and a second navigation error signal $\hat{e}_{mod}$ on the basis of the first and second estimated acceleration vectors $a_m$ and $a_e$ (i.e. typically $a_{adj}$) The first navigation error signal $\hat{e}_{INS}$ is fed back to the INS 210, where the signal causes an adjustment of the estimated navigation data $S_{nav}$ in terms of position, velocity and orientation, as well as any estimated INS error sources, such as IMU measurement errors. Correspondingly, the second navigation error signal $\hat{e}_{mod}$ is fed back to the vehicle modeling unit 220, where this signal causes an updating of the at least one adaptive model $M_t$, $M_a$.

According to a preferred embodiment of the invention, the at least one adaptive model may include a thrust model $M_t$ that describes a behavior of a propulsion system of the vehicle onto which the apparatus 200 is mounted. The at least one adaptive model may also include an aerodynamic model $M_a$ that describes the aerodynamic properties of this vehicle. Again, if the vehicle is surface based, a different dynamic model may instead be relevant.

Particularly, if the vehicle onto which the apparatus 200 is mounted is an air vehicle, the apparatus 200 may preferably include (or at least be associated with) a wind estimation unit 230. This unit 230 provides an estimate of a current wind vector $\overline{W}^n$, which describes a wind experienced by the vehicle. An initial wind vector $\overline{W}^n$ may be derived from information entered into the apparatus 200 prior to a mission. However, if no such information is available an initial zero-estimate of the wind vector $\overline{W}^n$ may instead be applied.

In a steady-state operation of the apparatus 200, the wind vector $\overline{W}^n$ is fed to the vehicle modeling unit 220, which produces the second estimated acceleration vector $a_e$ on the further basis of this vector $\overline{W}^n$.

Naturally, the model applied by the wind estimation unit 230 may also need to be adjusted due to various error sources. Therefore, based on the first and second estimated acceleration vectors $a_m$ and $a_e$ respectively, the error estimation unit 250 preferably produces a third navigation error signal $\hat{e}_W$. This signal $\hat{e}_W$ is fed back to the wind estimation unit 230 for updating the estimated wind vector $\overline{W}^n$.

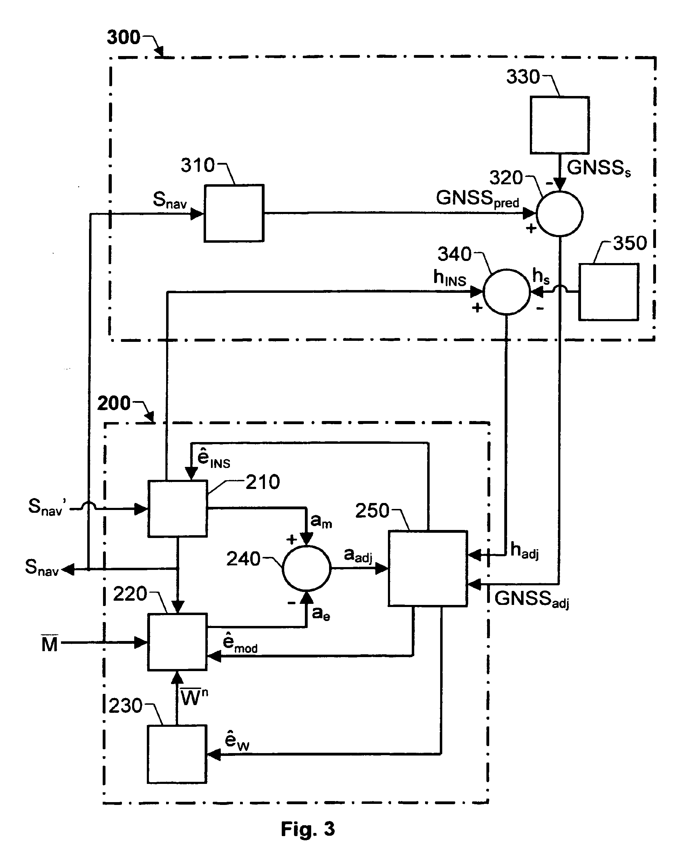

Figure 3 shows a block diagram over a navigation apparatus 200 according to a second embodiment of the invention. Here, the apparatus 200 is associated with an auxiliary navigation apparatus 300. Specifically, the auxiliary navigation apparatus 300 provides calibration signals $h_{ajd}$ and/or $GNSS_{adj}$ to the error estimation unit 250. In this case, the error estimation unit 250 is further adapted to adjust the first and second navigation error signals $\hat{e}_{INS}$ and $\hat{e}_{mod}$ respectively in response to the calibration signals $h_{ajd}$ and/or $GNSS_{adj}$. Preferably, the error estimation unit 250 is likewise adapted to adjust the third navigation error signal $\hat{e}_W$ in response to the calibration signals $h_{ajd}$ and/or $GNSS_{adj}$.

In order to produce a first source reference signal $GNSS_s$, the auxiliary navigation apparatus 300 includes a GNSS-receiver 330, which is adapted to receive a set of external navigation signals, e.g. from a number of satellites or base stations. In response to the received signals, the GNSS-receiver 330 generates the first source reference signal $GNSS_s$.

Additionally, the auxiliary navigation apparatus 300 includes a prediction unit 310, which receives the estimated navigation data $S_{nav}$ (e.g. position and/or other navigation related information) from the INS 210. Based on this data, the prediction unit 310 produces a first predicted reference signal $GNSS_{pred}$.

A first summation unit 320 in the auxiliary navigation apparatus 300 receives the first source reference signal $GNSS_s$ and the first predicted reference signal $GNSS_{pred}$. In response to these signals, the unit 320 generates the first calibration signal $GNSS_{adj}$, where for example $GNSS_{adj} = GNSS_s - GNSS_{pred}$.

As a complement or alternative to the GNSS-receiver 330, the auxiliary navigation apparatus 300 may include an altimeter 350. The altimeter 350 is adapted to generate a second source reference signal $h_s$, which represents an elevation parameter in respect of the vehicle onto which the apparatuses 200 and 300 are mounted. I.e. typically, the altimeter 350 measures the vehicle's altitude, either above the ground or above the mean sea level. The altimeter 350 may be based on radar or laser technology, and/or it may register an ambient air pressure.

A second summation unit 340 in the auxiliary navigation apparatus 300 receives the second source reference signal $h_s$ and an altitude estimate $h_{INS}$ from the INS 210. In response to these signals, the unit 340 generates a second calibration signal $h_{ajd}$, where for example $h_{adj} = h_s - h_{INS}$.

Consequently, the first and second calibration signals $h_{ajd}$ and/or $GNSS_{adj}$ enable a repeated calibration of the navigation procedure controlled by the error estimation unit 250.

Below, we will describe a specific measurement model that may be implemented by the error estimation unit 250 if the vehicle carrying the apparatus 200 (and possibly 300) is an air vehicle, such as an air craft, a missile or a UAV.

In order to design the measurement model for comparing an estimated acceleration $a_e$ based on a vehicle dynamic model with an acceleration $a_m$ measured by an INS it is necessary to express how any errors $\delta Va$, $\delta\alpha$ and $\delta\beta$ in the above-defined velocities $\overline{Va}^n$ and relative wind directions $\alpha$ and $\beta$ depend on any errors $\delta\overline{V}^n$ and $\delta\overline{W}^n$ in the INS-measured velocity $\overline{V}^n$ and the wind estimation $\overline{W}^n$ respectively.

Thus, the errors $\delta Va$, $\delta\alpha$ and $\delta\beta$ shall be calculated as a function of the errors in the INS-measured velocity, i.e.:

$$\delta\overline{V}^n = \begin{bmatrix} \delta V_N \\ \delta V_E \\ \delta V_D \end{bmatrix}.$$

An error-angle vector $\overline{\epsilon}^n$ here describes an orientation of a geographical coordinate system $\hat{n}$ that is calculated by the INS relative to the "actual" geographical coordinate system n, i.e.:

$$\overline{\epsilon}^n = \begin{bmatrix} \epsilon_N \\ \epsilon_E \\ \epsilon_D \end{bmatrix}.$$

Correspondingly, an error wind vector:

$$\delta\overline{W}^n = \begin{bmatrix} \delta W_N \\ \delta W_E \\ \delta W_D \end{bmatrix}$$

describes the errors in the wind estimation $\overline{W}^n$.

It is proposed that the above-mentioned errors $\delta Va$, $\delta\alpha$ and $\delta\beta$ be expressed as a function of $\delta\overline{V}^n$ and $\delta\overline{W}^n$, and that such a function be derived by means of a linearization around error free data. Thus, we presume that x is a function of y and z, i.e.:

$$x = f(y,z).$$

Thereby:

$$x + \delta x = f(y + \delta y, z + \delta z) \approx f(y,z) + \frac{df(y,z)}{dy}\delta y + \frac{df(y,z)}{dz}\delta z$$

Consequently

$$\delta x \approx \frac{df(y,z)}{dy}\delta y + \frac{df(y,z)}{dz}\delta z$$

As mentioned above, the air related velocity Va is given by:

$$Va = \sqrt{Va_N{}^2 + Va_E{}^2 + Va_D{}^2}$$

This means that the velocity error $\delta Va$ is:

$$\delta Va = \frac{1}{2Va}\left[2Va_N\delta Va_N + 2Va_E\delta Va_E + 2Va_D\delta Va_D\right]$$

$$\delta Va = \frac{Va_N}{Va}\delta Va_N + \frac{Va_E}{Va}\delta Va_E + \frac{Va_D}{Va}\delta Va_D$$

Analogous to the above:

$$\delta Va_N = \delta V_N - \delta W_N$$

$$\delta Va_E = \delta V_E - \delta W_E,$$

and

$$\delta Va_D = \delta V_D - \delta W_D$$

As a preparation for the determination of the angle errors $\delta\alpha$ and $\delta\beta$, we define a vehicle velocity $\overline{V}^b$ in the body-fixed coordinate system b, where:

$$\overline{V}^b = C_n^b\overline{V}^n$$

Hence, an error in this velocity may be expressed as:

$$\overline{V}^b + \delta\overline{V}^b = C_n^b C_{\hat{n}}^n(\overline{V}^n + \delta\overline{V}^n)$$

where $\hat{n}$ is the geographical coordinate system calculated by the INS, and $C_{\hat{n}}^n$ is a transformation matrix from this coordinate system to the "actual" geographical coordinate system n. As mentioned above, $\hat{n}$ is obtained from n by a rotation described by the error-angle vector $\overline{\varepsilon}^n$. Provided that this error-angle vector $\overline{\varepsilon}^n$ is relatively small, the following approximation is valid:

$$C_{\hat{n}}^{n} \approx I + \tilde{\varepsilon}^{n}$$

where I is the identity matrix and $\tilde{\varepsilon}^n$ is a so-called skew-symmetric form of the error-angle vector $\tilde{\varepsilon}^n$, which is:

$$\tilde{\varepsilon}^{n} = \begin{bmatrix} 0 & -\varepsilon_D & \varepsilon_E \\ \varepsilon_D & 0 & -\varepsilon_N \\ -\varepsilon_E & \varepsilon_N & 0 \end{bmatrix}$$

Using the approximation $C_{\hat{n}}^{n} \approx I + \tilde{\varepsilon}^{n}$ gives us:

$$\overline{V}^{b} + \delta\overline{V}^{b} \approx C_{n}^{b}(1 + \tilde{\varepsilon}^{n})(\overline{V}^{n} + \delta\overline{V}^{n})$$

$$\overline{V}^{b} + \delta\overline{V}^{b} \approx C_{n}^{b}\overline{V}^{n} + C_{n}^{b}\delta\overline{V}^{n} + C_{n}^{b}\tilde{\varepsilon}^{n}\overline{V}^{n} + C_{n}^{b}\tilde{\varepsilon}^{n}\delta\overline{V}^{n},$$

which means that the error $\delta\overline{V}^b$ is:

$$\delta\overline{V}^{b} = C_{n}^{b}\delta\overline{V}^{n} + C_{n}^{b}\tilde{\varepsilon}^{n}\overline{V}^{n} + C_{n}^{b}\tilde{\varepsilon}^{n}\delta\overline{V}^{n}$$

Provided that the product of error terms $C_{n}^{b}\tilde{\varepsilon}^{n}\delta\overline{V}^{n}$ can be neglected, the below approximation of the error $\delta\overline{V}^b$ is valid:

$$\delta\overline{V}^{b} = \begin{bmatrix} \delta V_x \\ \delta V_y \\ \delta V_z \end{bmatrix} \approx C_{n}^{b}\delta\overline{V}^{n} + C_{n}^{b}\tilde{\varepsilon}^{n}\overline{V}^{n}$$

where

$$C_{n}^{b}\delta\overline{V}^{n} = \begin{bmatrix} C_{11}\delta V_N + C_{12}\delta V_E + C_{13}\delta V_D \\ C_{21}\delta V_N + C_{22}\delta V_E + C_{23}\delta V_D \\ C_{31}\delta V_N + C_{32}\delta V_E + C_{33}\delta V_D \end{bmatrix}$$

and

$$C_n^b \widetilde{\varepsilon}^n \overline{V}^n = \begin{bmatrix} C_{11} & C_{12} & C_{13} \\ C_{21} & C_{22} & C_{23} \\ C_{31} & C_{32} & C_{33} \end{bmatrix} \cdot \begin{bmatrix} 0 & -\varepsilon_D & \varepsilon_E \\ \varepsilon_D & 0 & -\varepsilon_N \\ -\varepsilon_E & \varepsilon_N & 0 \end{bmatrix} \cdot \begin{bmatrix} V_N \\ V_E \\ V_D \end{bmatrix} =$$

$$= \begin{bmatrix} [C_{12}\varepsilon_D - C_{13}\varepsilon_E] & [-C_{11}\varepsilon_D + C_{13}\varepsilon_N] & [C_{11}\varepsilon_E - C_{12}\varepsilon_N] \\ [C_{22}\varepsilon_D - C_{23}\varepsilon_E] & [-C_{21}\varepsilon_D + C_{23}\varepsilon_N] & [C_{21}\varepsilon_E - C_{22}\varepsilon_N] \\ [C_{32}\varepsilon_D - C_{33}\varepsilon_E] & [-C_{31}\varepsilon_D + C_{33}\varepsilon_N] & [C_{31}\varepsilon_E - C_{32}\varepsilon_N] \end{bmatrix} \cdot \begin{bmatrix} V_N \\ V_E \\ V_D \end{bmatrix} =$$

$$= \begin{bmatrix} \varepsilon_N[C_{13}V_E - C_{12}V_D] + \varepsilon_E[C_{11}V_D - C_{13}V_N] + \varepsilon_D[C_{12}V_N - C_{11}V_E] \\ \varepsilon_N[C_{23}V_E - C_{22}V_D] + \varepsilon_E[C_{21}V_D - C_{23}V_N] + \varepsilon_D[C_{22}V_N - C_{21}V_E] \\ \varepsilon_N[C_{33}V_E - C_{32}V_D] + \varepsilon_E[C_{31}V_D - C_{33}V_N] + \varepsilon_D[C_{32}V_N - C_{31}V_E] \end{bmatrix}$$

The angle error $\delta\alpha$ for the relative wind direction $\alpha$ is derived from the expression:

$$\alpha = \arctan\left(\frac{Va_z}{Va_x}\right)$$

Since the angle $\alpha$ normally is relatively small:

$$\alpha \approx \tan\alpha = \frac{Va_z}{Va_x}.$$

Therefore:

$$d\alpha \approx \frac{1}{Va_x}\delta Va_z - \frac{Va_z}{Va_x^2}\delta Va_x$$

By substituting:

$$Va_x = Va\cos\beta\cos\alpha$$

$$Va_z = Va\cos\beta\sin\alpha$$

we obtain the angle error $\delta\alpha$ in the relative wind direction a as:

$$\text{;}\quad \delta\alpha \approx \frac{1}{Va_x \cos\alpha \cos\beta}\left[\delta Va_z - \tan\alpha \delta Va_x\right] \approx \frac{1}{Va_x \cos\alpha \cos\beta}\left[\delta Va_z - \alpha\delta Va_x\right]$$

which gives us:

$$
\begin{aligned}
\delta\alpha \approx \frac{1}{Va_x \cos\alpha \cos\beta}\Big\{ &\delta Va_N\left[C_{31} - \alpha C_{11}\right] + \delta Va_E\left[C_{32} - \alpha C_{12}\right] + \delta Va_D\left[C_{33} - \alpha C_{13}\right] + \\
&+ \varepsilon_N\left[C_{33}Va_E - C_{32}Va_D - \alpha(C_{13}Va_E - C_{12}Va_D)\right] + \\
&+ \varepsilon_E\left[C_{31}Va_D - C_{33}Va_N - \alpha(C_{11}Va_D - C_{13}Va_N)\right] + \\
&+ \varepsilon_D\left[C_{32}Va_N - C_{31}Va_E - \alpha(C_{12}Va_N - C_{11}Va_E)\right]\Big\}
\end{aligned}
$$

Analogous to the above, we discuss the angle error $\delta\beta$ in the relative wind direction $\beta$ as follows:

$$\beta = \arcsin = \frac{Va_y}{Va}$$

Thus

$$\beta \approx \sin\beta = \frac{Va_y}{Va}$$

The error angle $\delta\beta$ is defined as:

$$\delta\beta = \frac{1}{Va}\delta Va_y - \frac{Va_y}{Va^2}\delta Va$$

However,

$$Va_y = Va\sin\beta \approx Va\beta.$$

Therefore:

$$\delta\beta \approx \frac{1}{Va}\delta Va_y - \frac{\beta}{Va}\delta Va = \frac{1}{Va}\Big[C_{21}\delta Va_N + C_{22}\delta Va_E + C_{23}\delta Va_D +$$
$$\varepsilon_N\big[C_{23}Va_E - C_{22}Va_D\big] + \varepsilon_E\big[C_{21}Va_D - C_{23}Va_N\big] + \varepsilon_D\big[C_{22}Va_N - C_{21}Va_E\big]\Big] -$$
$$- \frac{\beta}{Va}\left[\frac{Va_N}{Va}\delta Va_N + \frac{Va_E}{Va}\delta Va_E + \frac{Va_D}{Va}\delta Va_D\right]$$

Consequently:

$$\delta\beta \approx \frac{1}{Va}\left\{\delta Va_N\left[C_{21} - \frac{\beta Va_N}{Va}\right] + \delta Va_E\left[C_{22} - \frac{\beta Va_E}{Va}\right] + \delta Va_D\left[C_{23} - \frac{\beta Va_D}{Va}\right] +\right.$$
$$\left. + \varepsilon_N\big[C_{23}Va_E - C_{22}Va_D\big] + \varepsilon_E\big[C_{21}Va_D - C_{23}Va_N\big] + \varepsilon_D\big[C_{22}Va_N - C_{21}Va_E\big]\right\}$$

Summing up the above variables and parameters, we have: the transformation matrix

$$C_n^b = \begin{bmatrix} C_{11} & C_{12} & C_{13} \\ C_{21} & C_{22} & C_{23} \\ C_{31} & C_{32} & C_{33} \end{bmatrix},$$

which describes the relationship between the body-fixed coordinate system b and the geographical coordinate system n; the air related velocity $\overline{Va}^n$ expressed in the geographical coordinate system n, where

$$\overline{Va}^n = \overline{V}^n - \overline{W}^n = \begin{bmatrix} V_N - W_N \\ V_E - W_E \\ V_D \end{bmatrix} = \begin{bmatrix} Va_N \\ Va_E \\ Va_D \end{bmatrix} \text{ and } Va = \sqrt{Va_N^2 + Va_E^2 + Va_D^2}$$

and the corresponding errors are:

$$\delta\overline{Va}^n = \begin{bmatrix} \delta Va_N \\ \delta Va_E \\ \delta Va_D \end{bmatrix} = \begin{bmatrix} \delta V_N - \delta W_N \\ \delta V_E - \delta W_E \\ \delta V_D - \delta W_D \end{bmatrix}$$

and

$$\delta Va = \frac{Va_N}{Va}\delta Va_N + \frac{Va_E}{Va}\delta Va_E + \frac{Va_D}{Va}\delta Va_D$$

respectively;

and the angle errors $\delta\alpha$ and $\delta\beta$ in the relative wind directions $\alpha$ and $\beta$ can be approximated as:

$$
\begin{aligned}
\delta\alpha \approx \frac{1}{Va\cos\alpha\cos\beta} & \{\delta Va_N[C_{31} - \alpha C_{11}] + \delta Va_E[C_{32} - \alpha C_{12}] + \delta Va_D[C_{33} - \alpha C_{13}] + \\
& + \varepsilon_N[C_{33}Va_E - C_{32}Va_D - \alpha(C_{13}Va_E - C_{12}Va_D)] + \\
& + \varepsilon_E[C_{31}Va_D - C_{33}Va_N - \alpha(C_{11}Va_D - C_{13}Va_N)] + \\
& + \varepsilon_D[C_{32}Va_N - C_{31}Va_E - \alpha(C_{12}Va_N - C_{11}Va_E)]\}
\end{aligned}
$$

and

$$
\begin{aligned}
\delta\beta \approx \frac{1}{Va} & \left\{\delta Va_N\left[C_{21} - \frac{\beta Va_N}{Va}\right] + \delta VaE\left[C_{22} - \frac{\beta Va_E}{Va}\right] + \delta VaD\left[C_{23} - \frac{\beta Va_D}{Va}\right] + \\
& + \varepsilon_N[C_{23}Va_E - C_{22}Va_D] + \varepsilon_E[C_{21}Va_D - C_{23}Va_N] + \varepsilon_D[C_{22}Va_N - C_{21}Va_E]\right\}.
\end{aligned}
$$

An exemplary model for an aerodynamic force $F_A^a$ of the above-mentioned aerodynamic model $M_a$ may be defined as:

$$
F_A^a = -C_{qs} \cdot Va^2 \begin{pmatrix} C_{to} \\ C_{co} + C_{c\beta} \cdot \beta \\ C_{no} + C_{n\alpha} \cdot \alpha \end{pmatrix}
$$

where:

$$
C_{qs} = \frac{\rho}{2} \cdot S
$$

$\rho$ is the air density,

S represents a reference area,

Va is the air related velocity,

$\alpha$ defines an angle of attack (positive from below),

$\beta$ defines an angle of sideslip (positive from the right-hand side), and

$C_{to}$, $C_{co}$, $C_{no}$, $C_{n\alpha}$ and $C_{n\beta}$ represent unitless aerodynamic coefficients.

An exemplary model for a vehicle thrust vector $F_T^a$ of the above-mentioned thrust model $M_t$ may be defined as:

$$F_T^a = \begin{bmatrix} F_{Tx} \\ F_{Ty} \\ F_{Tz} \end{bmatrix} = F_P \cdot \begin{bmatrix} \cos\theta_T \\ 0 \\ -\sin\theta_T \end{bmatrix}$$

where: $F_P$ is a propulsion force, and
$\theta_T$ defines a thrust vector pitch angle.

Analogous to the errors $\delta V_a$, $\delta\alpha$ and $\delta\beta$, we derive the errors in the estimated acceleration $a_e$ by means of a linearization around error free data. Thus, we express the acceleration $a_e$ as:

$$a_e = \frac{1}{m}(F_T^a + F_A^a)$$

Therefore:

$$da_e = \frac{da_e}{dm} \cdot dm + \frac{da_e}{dF_T^a} \cdot dF_T^a + \frac{da_e}{dF_A^a} \cdot dF_A^a$$

According to the above

$$F_A^a = -C_{qs} \cdot Va^2 \begin{pmatrix} C_{to} \\ C_{co} + C_{c\beta} \cdot \beta \\ C_{no} + C_{n\alpha} \cdot \alpha \end{pmatrix},$$

and consequently:

$$dF_A^a = \frac{dF_A^a}{dC_{to}} \cdot dC_{to} + \frac{dF_A^a}{dC_{c\beta}} \cdot dC_{c\beta} + \frac{dF_A^a}{dC_{no}} \cdot dC_{no} + \frac{dF_A^a}{dC_{n\alpha}} \cdot dC_{n\alpha} +$$

$$+ \frac{dF_A^a}{dVa} \cdot dVa + \frac{dF_A^a}{d\beta} \cdot d\beta + \frac{dF_A^a}{d\alpha} \cdot d\alpha.$$

Hence, it is possible to obtain expressions describing how the errors in the estimated acceleration vector $a_e$ depend on any errors in the INS (i.e. $\delta\overline{V}^n$ and $\overline{\overline{\varepsilon}}^n$), the wind estimation errors (i.e. $\delta\overline{W}^n$) and the errors in the at least one adaptive model ($dC_{to}$, $dC_{co}$, $dC_{no}$, $dC_{n\alpha}$, $dC_{n\beta}$ and $dF_T^a$) respectively. According to the invention, the error estimation unit 250 uses such expressions to produce navigation error signals based on a measured acceleration vector (i.e. $a_m$) and an estimated acceleration vector (i.e. $a_e$). Preferably, these navigation error signals are based on a difference between said acceleration vectors.

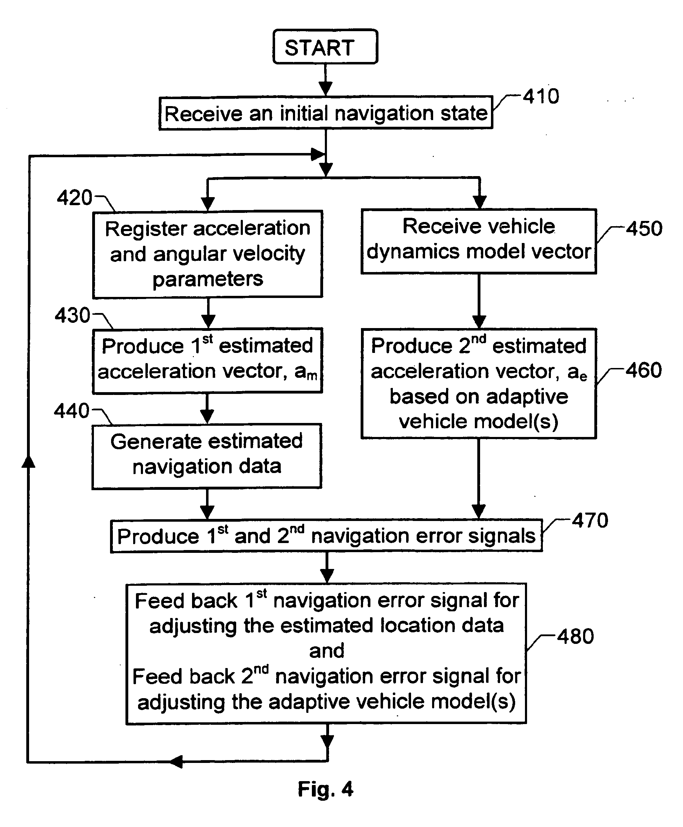

Now, in order to sum up, the general method of producing navigation data according to the invention, will be described with reference to the flow diagram of figure 4.

A first step 410 receives an initial navigation state in terms of position, velocity and orientation to represent a start value to an INS. The initial position may either be entered manually, or it may be based on a measurement by a GNSS receiver. Then, a step 420 registers acceleration and angular velocity parameters in three dimensions in respect of a body-fixed coordinate system. Typically, an IMU registers these parameters. Based on the parameters of the step 420, a step 430 produces a first estimated acceleration vector $a_m$ for the vehicle in respect of which the step 420 registered the acceleration and angular velocity parameters. On the further basis of the first estimated acceleration vector $a_m$ and the coordinates of the initial position, a step 440 generates estimated navigation data, i.e. an updated position, velocity and orientation.

A step 450 receives a model vector describing the vehicle dynamics of the vehicle for which the step 420 has registered the acceleration and angular velocity parameters. Subsequently, by applying at least one adaptive model to the model vector and the estimated navigation data, a step 460 produces a second estimated acceleration vector $a_e$ for the vehicle. Preferably, the steps 450 and 460 are executed essentially in parallel with the steps 420, 430 and 440.

A step 470 produces a first navigation error signal on the basis of the first estimated acceleration vector $a_m$ and the second estimated acceleration vector $a_e$. The step 470 also produces a second navigation error signal on the basis of the first estimated acceleration vector $a_m$ and the second estimated acceleration vector $a_e$. Naturally, according to the invention, the first and second navigation error signals may equally well be produced by two separate steps.

After that, a step 480 feeds back the first and second navigation error signals to adjust the estimated navigation data and the at least one adaptive model respectively. Then, the procedure loops back to the steps 420 and 450 again.

Of course, in an actual implementation of this procedure, essentially all the steps 420 to 480 are active simultaneously, however operating on different source data. This means that, for example while the step 470 produces the first and second navigation error signals in respect of a set of acceleration vectors for a particular position, the steps 420 and 450 registers acceleration and angular velocity parameters respective receives a vehicle dynamics model vector being relevant for a somewhat later position, and so on. Hence, the sequential procedure of the figure 4 is valid in regard of a certain estimated position.

All of the process steps, as well as any sub-sequence of steps, described with reference to the figure 4 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code; object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

**Claims**

1. A navigation apparatus (200) adapted to be mounted in a vehicle (110) for generating estimated navigation data ($S_{nav}$) describing the vehicle's (110) geographical position, velocity and orientation, the apparatus (200) comprising:

    an inertial measurement system (210) adapted to register acceleration and angular velocity parameters in three dimensions in respect of a body-fixed coordinate system (b) associated with the vehicle (110), based on these parameters produce a first estimated acceleration vector ($a_m$) for the vehicle (110), and on the further basis of a known initial navigation state ($S_{nav}$') and the first estimated acceleration vector ($a_m$) generate the estimated navigation data ($S_{nav}$); and

an error estimation unit (250) adapted to produce a first navigation error signal ($\hat{e}_{INS}$) at least on the basis of the first estimated acceleration vector ($a_m$), and feed back the first navigation error signal ($\hat{e}_{INS}$) to the inertial measurement system (210) for adjusting the estimated navigation data ($S_{nav}$), **characterized in that** the apparatus (200) comprises:

a vehicle modeling unit (220) adapted to receive:

the estimated navigation data ($S_{nav}$), and
a model vector ($\overline{M}$) describing the vehicle dynamics of the vehicle (110), and
based on the model vector ($\overline{M}$), the estimated navigation data ($S_{nav}$) and at least one adaptive model ($M_t$, $M_a$) produce a second estimated acceleration vector ($a_e$) for the vehicle (110); and

the error estimation unit (250) is adapted to:

produce the first navigation error signal ($\hat{e}_{INS}$) on the further basis of the second estimated acceleration vector ($a_e$),
produce a second navigation error signal ($\hat{e}_{mod}$) based on the first and second estimated acceleration vectors ($a_m$, $a_e$), and
feed back the second navigation error signal ($\hat{e}_{mod}$) to the vehicle modeling unit (220) for updating the at least one adaptive model ($M_t$, $M_a$).

2. The apparatus (200) according to claim 1, **characterized in that** the at least one adaptive model comprises a thrust model ($M_t$) describing a behavior of a propulsion system of the vehicle (110), and an aerodynamic model ($M_a$) describing the aerodynamic properties of the vehicle (110).

3. The apparatus (200) according to claim 2, wherein the vehicle (110) is an aircraft, **characterized in that** the model vector ($\overline{M}$) comprises data describing at least one of: flap angles, elevator angles, rudder angles, spoiler angles or engine thrusts of the vehicle (110), and an ambient air temperature or an ambient air pressure.

4. The apparatus (200) according to any one of the preceding claims, **characterized in that** it comprises a wind estimation unit (230) adapted to estimate a wind vector ($\overline{W}^n$) describing a wind experienced by the vehicle (110); and the vehicle modeling unit (220) is adapted to receive the wind vector ($\overline{W}^n$) and produce the second estimated acceleration vector ($a_e$) on the further basis of the wind vector ($\overline{W}^n$).

5. The apparatus (200) according to claim 4, **characterized in that** the error estimation unit (250) is adapted to:

produce a third navigation error signal ($\hat{e}_w$) based on the first and second estimated acceleration vectors ($a_m$, $a_e$), and
feed back the third navigation error signal ($\hat{e}_w$) to the wind estimation unit (230) for updating the estimated wind vector ($\overline{W}^n$).

6. The apparatus (200) according to any one of the preceding claims, **characterized in that** the apparatus (200) is associated with an auxiliary navigation apparatus (300) adapted to provide at least one calibration signal ($h_{ajd}$, $GNSS_{adj}$) to the error estimation unit (250), and the error estimation unit (250) is adapted to adjust the first and second navigation error signals ($\hat{e}_{INS}$, $\hat{e}_{mod}$) in response to the at least one calibration signal ($h_{ajd}$, $GNSS_{adj}$).

7. The apparatus (200) according to claim 5 in combination with claim 6, **characterized in that** the error estimation unit (250) is adapted to adjust the third navigation error signal ($\hat{e}_W$) in response to the at least one calibration signal ($h_{ajd}$, $GNSS_{adj}$).

8. The apparatus (200) according to any one of claim 6 or 7, **characterized in that** the auxiliary navigation apparatus (300) comprises:

a GNSS-receiver (330) adapted to receive a set of external navigation signals, and based thereon produce a first source reference signal ($GNSS_s$),
a prediction unit (310) adapted to receive the estimated navigation data ($S_{nav}$) and based thereon produce a first predicted reference signal ($GNSS_{pred}$),
a first summation unit (320) adapted to generate a first calibration signal ($GNSS_{adj}$) of said at least one calibration signal ($h_{ajd}$, $GNSS_{adj}$) in response to the first source reference signal ($GNSS_s$) and the first predicted reference signal ($GNSS_{pred}$).

9. The apparatus (200) according to any one of the claims 7 or 8, **characterized in that** the auxiliary navigation apparatus (300) comprises:

an altimeter (350) adapted to generate a second source reference signal ($h_s$) representing an elevation parameter in respect of the vehicle (110), and

a second summation unit (340) adapted to generate a second calibration signal ($h_{ajd}$) of said at least one calibration signal ($h_{ajd}$, $GNSS_{adj}$) in response to the second source reference signal ($h_s$) and an altitude estimate ($h_{INS}$) generated by the inertial measurement system (210).

10. A navigation method for generating estimated navigation data ($S_{nav}$) describing a geographical position, a velocity and an orientation of a vehicle (110), the method comprising:

registering acceleration and angular velocity parameters in three dimensions in respect of a body-fixed coordinate system (b) associated with the vehicle (110),

producing a first estimated acceleration vector ($a_m$) for the vehicle (110) based on the acceleration and angular velocity parameters,

generating the estimated navigation data ($S_{nav}$) based on a known initial navigation state ($S_{nav}'$) and the first estimated acceleration vector ($a_m$),

producing a first navigation error signal ($\hat{e}_{INS}$) at least on the basis of the first estimated acceleration vector ($a_m$), and

feeding back the first navigation error signal ($\hat{e}_{INS}$) to the inertial measurement system (210) for adjusting the estimated navigation data ($S_{nav}$), the method **characterized by**

receiving the estimated navigation data ($S_{nav}$) and a model vector ($\overline{M}$) describing the vehicle dynamics of the vehicle (110), and

producing a second estimated acceleration vector ($a_e$) for the vehicle (110) based on the model vector ($\overline{M}$), the estimated navigation data ($S_{nav}$) and at least one adaptive model ($M_t$, $M_a$)

producing the first navigation error signal ($\hat{e}_{INS}$) on the further basis of the second estimated acceleration vector ($a_e$),

producing a second navigation error signal ($\hat{e}_{mod}$) based on the first and second estimated acceleration vectors ($a_m$, $a_e$), and

feeding back the second navigation error signal ($\hat{e}_{mod}$) to the vehicle modeling unit (220) for updating the at least one adaptive model ($M_t$, $M_a$).

11. The method according to claim 10, **characterized by** the at least one adaptive model comprising:

a thrust model ($M_t$) describing a behavior of a propulsion system of the vehicle (110), and

an aerodynamic model ($M_a$) describing the aerodynamic properties of the vehicle (110).

12. The method according to claim 11, wherein the vehicle (110) is an aircraft, the method **characterized by** the model vector ($\overline{M}$) comprising data that describes at least one of: flap angles, elevator angles, rudder angles, spoiler angles or engine thrusts of the vehicle (110), and an ambient air temperature or an ambient air pressure.

13. The method according to any one of the claims 10-12, **characterized by**:

estimating a wind vector ($\overline{W}^n$) that describes a wind experienced by the vehicle (110) based on the velocity vector ($\overline{V}a^b$), and

producing the second estimated acceleration vector ($a_e$) on the further basis of the wind vector ($\overline{W}^n$).

14. The method according to claim 13, **characterized by**:

producing a third navigation error signal ($\hat{e}_w$) based on the first and second estimated acceleration vectors ($a_m$, $a_e$), and

feeding back the third navigation error signal ($\hat{e}_W$) to the wind estimation unit (230) for updating the estimated wind vector ($\overline{W}^n$).

**15.** The method according to any one of the claims 10-14, **characterized by**:

receiving at least one calibration signal ($h_{ajd}$, $GNSS_{adj}$) representing data derived from at least one information source which is independent from the vehicle (110), and
adjusting the first and second navigation error signals ($\hat{e}_{INS}$, $\hat{e}_{mod}$) in response to the at least one calibration signal ($h_{ajd}$, $GNSS_{adj}$).

**16.** The method according to claim 14 in combination with claim 15, **characterized by** adjusting the third navigation error signal ($\hat{e}_w$) in response to the at least one calibration signal ($h_{ajd}$, $GNSS_{adj}$).

**17.** The method according to any one of the claims 15 or 16, **characterized by**:

receiving a set of external navigation signals,
producing a first source reference signal ($GNSS_s$) based on the set of external navigation signals,
producing a first predicted reference signal ($GNSS_{pred}$) based on the estimated navigation data ($S_{nav}$), and
generating a first calibration signal ($GNSS_{adj}$) of said at least one calibration signal ($h_{ajd}$, $GNSS_{adj}$) in response to the first source reference signal ($GNSS_s$) and the first predicted reference signal ($GNSS_{pred}$).

**18.** The method according to any one of the claims 16 or 17, **characterized by**:

generating a second source reference signal ($h_s$) representing an elevation parameter in respect of the vehicle (110), and
generating a second calibration signal ($h_{ajd}$) of said at least one calibration signal ($h_{ajd}$, $GNSS_{adj}$) in response to the second source reference signal ($h_s$) and an altitude estimate ($h_{INS}$).

**19.** A computer program directly loadable into the internal memory of a computer, comprising software for controlling the steps of any of the claims 10-18 when said program is run on the computer.

**20.** A computer readable medium, having a program recorded thereon, where the program is to make a computer control the steps of any of the claims 10 - 18.

**Patentansprüche**

**1.** Navigationsapparat (200), der zur Aufnahme in einem Fahrzeug (110) ausgebildet ist, zum Erzeugen geschätzter Navigationsdaten ($S_{nav}$), die die geographische Position, Geschwindigkeit und Orientierung des Fahrzeugs (110) beschreiben, wobei der Apparat (200) umfasst:

ein Trägheitsmessungssystem (210), das ausgebildet ist zum Aufzeichnen von Beschleunigungs- und Winkelgeschwindigkeits-Parametern in drei Dimensionen hinsichtlich eines dem Fahrzeug (110) zugehörigen körperfesten Koordinatensystems (b), zum Produzieren auf der Grundlage dieser Parameter eines ersten geschätzten Beschleunigungsvektors ($a_m$) für das Fahrzeug (110), und zum Erzeugen der geschätzten Navigationsdaten ($S_{nav}$) auf der weiteren Grundlage eines bekannten Anfangsnavigationszustands ($S_{nav}$') und des ersten ge-schätzten Beschleunigungsvektors ($a_m$); und
eine Fehlerschätzungseinheit (250), die ausgebildet ist zum Produzieren eines ersten Navigationsfehlersignals ($\hat{e}_{INS}$) wenigstens auf der Grundlage des ersten geschätzten Beschleunigungsvektors ($a_m$), und zum Zurück-koppeln des ersten Navigationsfehlersignals ($\hat{e}_{INS}$) an das Trägheitsmessungssystem (210) zum Einstellen der geschätzten Navigationsdaten ($S_{nav}$), **dadurch gekennzeichnet, dass** der Apparat (200) umfasst:

eine Fahrzeugmodellierungseinheit (220), die ausgebildet ist zum Empfangen:

der geschätzten Navigationsdaten ($S_{nav}$), und eines Modellvektors ($\overline{M}$), der die Fahrzeugdynamik des Fahrzeugs (110) beschreibt, und
auf Grundlage des Modellvektors ($\overline{M}$), der geschätzten Navigationsdaten ($S_{nav}$) und wenigstens eines adaptiven Modells ($M_t$, $M_a$) zum Produzieren eines zweiten geschätzten Beschleunigungsvektors ($a_e$) für das Fahrzeug (110); und

wobei die Fehlerschätzungseinheit (250) ausgebildet ist zum

**19**

Produzieren des ersten Navigationsfehlersignals ($\hat{e}_{INS}$) auf der weiteren Grundlage des zweiten geschätzten Beschleunigungsvektors ($a_e$),

Produzieren eines zweiten Navigationsfehlersignals ($\hat{e}_{mod}$) auf der Grundlage des ersten und des zweiten geschätzten Beschleunigungsvektor ($a_m$, $a_e$), und

Zurückkoppeln des zweiten Navigationsfehlersignals ($\hat{e}_{mod}$) an die Fahrzeugmodellierungseinheit (220) zum Aktualisieren des wenigstens einen adaptiven Modells ($M_t$, $M_a$).

2. Apparat (200) gemäß Anspruch 1, **dadurch gekennzeichnet, dass** das wenigstes eine adaptive Modell umfasst:

ein Schubmodell ($M_t$), das ein Verhalten eines Vortriebssystems des Fahrzeugs (110) beschreibt, und

ein Aerodynamikmodell ($M_a$), das die Aerodynamikeigenschaften des Fahrzeugs (110) beschreibt.

3. Apparat (200) gemäß Anspruch 2, wobei das Fahrzeug (110) ein Luftfahrzeug ist, **dadurch gekennzeichnet, dass** der Modellvektor ($\overline{M}$) Daten umfasst, die wenigstens eines beschreiben von: Landeklappenwinkel, Höhenruderwinkel, Seitenruderwinkel, Störklappenwinkel oder Motorschübe des Fahrzeugs (110), und/oder eine Außenlufttemperatur oder einen Außenluftdruck.

4. Apparat (200) gemäß einem der vorhergehenden Ansprüche, **dadurch gekennzeichnet, dass** er eine Windschätzungseinheit (230) umfasst, die ausgebildet ist zum Schätzen eines Windvektors ($\overline{W}^n$), der einen Wind beschreibt, dem das Fahrzeug (110) ausgesetzt ist; und dass die Fahrzeugmodellierungseinheit (220) ausgebildet ist zum Empfangen des Windvektors ($\overline{W}^n$) und zum Produzieren des zweiten geschätzten Beschleunigungsvektors ($a_e$) auf der weiteren Grundlage des Windvektors ($\overline{W}^n$).

5. Apparat (200) gemäß Anspruch 4, **dadurch gekennzeichnet, dass** die Fehlerschätzungseinheit (250) ausgebildet ist zum:

Produzieren eines dritten Navigationsfehlersignals ($\hat{e}_w$) auf der Grundlage des ersten und des zweiten geschätzten Beschleunigungsvektors ($a_m$, $a_e$), und

Zurückkoppeln des dritten Navigationsfehlersignals ($\hat{e}_w$) an die Windschätzungseinheit (230) zum Aktualisieren des geschätzten Windvektors ($\overline{W}^n$).

6. Apparat (200) gemäß einem der vorhergehenden Ansprüche, **dadurch gekennzeichnet, dass** der Apparat (200) mit einem Hilfs-Navigationsapparat (300) verknüpft ist, der ausgebildet ist zum Bereitstellen wenigstens eines Kalibrierungssignals ($h_{ajd}$, $GNSS_{adj}$) für die Fehlerschätzungseinheit (250), und dass die Fehlerschätzungseinheit (250) ausgebildet ist zum Einstellen des ersten und des zweiten Navigationsfehlersignals ($\hat{e}_{INS}$, $\hat{e}_{mod}$) in Ansprechen auf das wenigstens eine Kalibrierungssignal ($h_{ajd}$, $GNSS_{adj}$).

7. Apparat (200) gemäß Anspruch 5 in Kombination mit Anspruch 6, **dadurch gekennzeichnet, dass** die Fehlerschätzungseinheit (250) ausgebildet ist zum Einstellen des dritten Navigationsfehlersignals ($\hat{e}_w$) in Ansprechen auf das wenigstens eine Kalibrierungssignal. ($h_{ajd}$, $GNSS_{adj}$).

8. Apparat (200) gemäß einem der Ansprüche 6 oder 7, **dadurch gekennzeichnet, dass** der Hilfs-Navigationsapparat (300) umfasst:

einen GNSS-Empfänger (330), der ausgebildet ist zum Empfangen eines Satzes externer Navigationssignale und zum Produzieren auf Grundlage derer eines ersten Quellenreferenzsignals ($GNSS_s$),

eine Vorhersageeinheit (310), die ausgebildet ist zum Empfangen der geschätzten Navigationsdaten ($S_{nav}$) und zum Produzieren auf Grundlage derer eines ersten vorhergesagten Referenzsignals ($GNSS_{pred}$),

eine erste Summierungseinheit (320), die ausgebildet ist zum Erzeugen eines ersten Kalibrierungssignals ($GNSS_{adj}$) des wenigstens einen Kalibrierungssignals ($h_{ajd}$, $GNSS_{adj}$) in Ansprechen auf das erste Quellenreferenzsignal ($GNSS_s$) und das erste vorhergesagte Referenzsignal ($GNSS_{pred}$).

9. Apparat (200) gemäß einem der Ansprüche 7 oder 8, **dadurch gekennzeichnet, dass** der Hilfs-Navigationsapparat (300) umfasst:

einen Höhenmesser (350), der ausgebildet ist zum Erzeugen eines zweiten Quellenreferenzsignals ($h_s$), das einen Elevationsparameter bezüglich des Fahrzeugs (110) darstellt, und

eine zweite Summierungseinheit (340), die ausgebildet ist zum Erzeugen eines zweiten Kalibrierungssignals

($h_{ajd}$) des wenigstens einen Kalibrierungssignals ($h_{ajd}$, $GNSS_{adj}$) in Ansprechen auf das zweite Quellenreferenzsignal ($h_s$) und eine durch das Trägheitsmessungssystem (210) erzeugte Höhenschätzung ($h_{INS}$).

10. Navigationsverfahren zum Erzeugen geschätzter Navigationsdaten ($S_{nav}$), die eine geographische Position, eine Geschwindigkeit und eine Orientierung eines Fahrzeugs (110) beschreiben, wobei das Verfahren umfasst:

Aufzeichnen von Beschleunigungs- und Winkelgeschwindigkeitsparametern in drei Dimensionen hinsichtlich eines dem Fahrzeug (110) zugehörigen körperfesten Koordinatensystems (b),
Produzieren eines ersten geschätzten Beschleunigungsvektors ($a_m$) für das Fahrzeug (110) auf Grundlage der Beschleunigungs- und Winkelgeschwindigkeitsparameter,
Erzeugen der geschätzten Navigationsdaten ($S_{nav}$) auf Grundlage eines bekannten Anfangsnavigationszustands ($S_{nav}'$) und des ersten geschätzten Beschleunigungsvektors ($a_m$),
Produzieren eines ersten Navigationsfehlersignals ($ê_{INS}$) auf wenigstens der Grundlage des ersten geschätzten Beschleunigungsvektors ($a_m$), und
Zurückkoppeln des ersten Navigationsfehlersignals ($ê_{INS}$) an das Trägheitsmessungssystem (210) zum Einstellen der geschätzten Navigationsdaten ($S_{nav}$), wobei das Verfahren **gekennzeichnet ist durch**:

Empfangen der geschätzten Navigationsdaten ($S_{nav}$) und eines Modellvektors ($\overline{M}$), der die Fahrzeugdynamik des Fahrzeugs (110) beschreibt, und
Produzieren eines zweiten geschätzten Beschleunigungsvektors ($a_e$) für das Fahrzeug (110) auf Grundlage des Modellvektors ($\overline{M}$), der geschätzten Navigationsdaten ($S_{nav}$) und wenigstens eines adaptiven Modells ($M_t$, $M_a$),
Produzieren des ersten Navigationsfehlersignals ($ê_{INS}$) auf der weiteren Grundlage des zweiten geschätzten Beschleunigungsvektors ($a_e$),
Produzieren eines zweiten Navigationsfehlersignals ($ê_{mod}$) auf Grundlage des ersten und des zweiten geschätzten Beschleunigungsvektors ($a_m$, $a_e$), und
Zurückkoppeln des zweiten Navigationsfehlersignals ($ê_{mod}$) an die Fahrzeugmodellierungseinheit (220) zum Aktualisieren des wenigstens einen adaptiven Modells ($M_t$, $M_a$).

11. Verfahren gemäß Anspruch 10, **dadurch gekennzeichnet, dass** das wenigstens eine adaptive Modell umfasst:

ein Schubmodell ($M_t$), das ein Verhalten eines Vortriebssystems des Fahrzeugs (110) beschreibt, und
ein Aerodynamikmodell ($M_a$), das die Aeradynamikeigenschaften des Fahrzeugs (110) beschreibt.

12. Apparat (200) gemäß Anspruch 11, wobei das Fahrzeug (110) ein Luftfahrzeug ist, **dadurch gekennzeichnet, dass** der Modellvektor ($\overline{M}$) Daten umfasst, die wenigstens eines beschreiben von: Landeklappenwinkel, Höhenruderwinkel, Seitenruderwinkel, Störklappenwinkel oder Motorschübe des Fahrzeugs (110), und/oder eine Außenlufttemperatur oder einen Außenluftdruck.

13. Verfahren gemäß einem der Ansprüche 10 bis 12, **gekennzeichnet durch**:

Schätzen eines Windvektors ($\overline{W}^n$), der einen Wind beschreibt, dem das Fahrzeug (110) ausgesetzt ist, auf der Grundlage des Geschwindigkeitsvektors ($\overline{V}a^b$) und
Produzieren des zweiten geschätzten Beschleunigungsvektors ($a_e$) auf der weiteren Grundlage des Windvektors ($\overline{W}^n$).

14. Verfahren gemäß Anspruch 13, **gekennzeichnet durch**:

Produzieren eines dritten Navigationsfehlersignals ($ê_w$) auf Grundlage des ersten und des zweiten geschätzten Beschleunigungsvektors ($a_m$, $a_e$), und
Zurückkoppeln des dritten Navigationsfehlersignals ($ê_w$) an die Windschätzungseinheit (230) zum Aktualisieren des geschätzten Windvektors ($\overline{W}^n$).

15. Verfahren gemäß einem der Ansprüche 10 bis 14, **gekennzeichnet durch**:

Empfangen wenigstens eines Kalibrierungssignals ($h_{ajd}$, $GNSS_{adj}$) das Daten darstellt, die von wenigstens einer Informationsquelle abgeleitet sind, die von dem Fahrzeug (110) unabhängig ist, und
Einstellen des ersten und des zweiten Navigationsfehlersignals ($ê_{INS}$, $ê_{mod}$) in Ansprechen auf das wenigstens eine Kalibrierungssignal ($h_{ajd}$, $GNSS_{adj}$).

16. Verfahren gemäß Anspruch 14 in Kombination mit Anspruch 15, **gekennzeichnet durch** Einstellen des dritten Navigationsfehlersignals ($\hat{e}_w$) in Ansprechen auf das wenigstens eine Kalibrierungssignal ($h_{ajd}$, $GNSS_{adj}$) .

17. Verfahren gemäß einem der Ansprüche 15 oder 16, **gekennzeichnet durch**:

Empfangen eines Satzes externer Navigationssignale,
Produzieren eines ersten Quellenreferenzsignals ($GNSS_s$) auf Grundlage des Satzes externer Navigationssignale,
Produzieren eines ersten vorhergesagten Referenzsignals ($GNSS_{pred}$) auf Grundlage der geschätzten Navigationsdaten ($S_{nav}$), und
Erzeugen eines ersten Kalibrierungssignals ($GNSS_{adj}$) des wenigstens einen Kalibrierungssignals ($h_{ajd}$, $GNSS_{adj}$) in Ansprechen auf das erste Quellenreferenzsignal ($GNSS_s$) und das erste vorhergesagte Referenzsignal ($GNss_{pred}$).

18. Verfahren gemäß einem der Ansprüche 16 oder 17, **gekennzeichnet durch**:

Erzeugen eines zweiten Quellenreferenzsignals ($h_s$), das einen Elevationsparameter hinsichtlich des Fahrzeugs (110) darstellt, und
Erzeugen eines zweiten Kalibrierungssignals ($h_{ajd}$) des wenigstens einen Kalibrierungssignals ($h_{ajd}$, $GNSS_{adj}$) in Ansprechen auf das zweite Quellenreferenzsignal ($h_s$) und eine Höhenschätzung ($h_{INS}$).

19. Computerprogramm, das direkt in den internen Speicher eines Computers ladbar ist, mit einer Software zum Steuern der Schritte eines der Ansprüche 10 - 18, wenn das Programm auf dem Computer läuft.

20. Computerlesbares Medium mit einem darauf aufgenommenen Programm, wobei das Programm einen Computer zum Steuern der Schritte eines der Ansprüche 10 - 18 veranlassen soll.

**Revendications**

1. Appareil de navigation (200) adapté pour être monté dans un véhicule (110) pour générer des données de navigation estimées ($S_{nav}$) décrivant la position géographique, la vitesse et l'orientation du véhicule (110), l'appareil (200) comprenant :

un système de mesure inertiel (210) adapté pour enregistrer les paramètres d'accélération et de vitesse angulaire en trois dimensions par rapport à un système de coordonnées fixé à la carrosserie (b) associé au véhicule (110), sur la base de ces paramètres, pour produire un premier vecteur d'accélération estimée ($a_m$) pour le véhicule (110) et, en outre, sur la base d'un état de navigation initial connu ($S_{nav}'$) et du premier vecteur d'accélération estimée ($a_m$) pour générer les données de navigation estimée ($S_{nav}$) ; et
une unité d'estimation d'erreur (250) adaptée pour produire un premier signal d'erreur de navigation ($\hat{e}_{INS}$) au moins sur la base du premier vecteur d'accélération estimée ($a_m$) et, pour renvoyer le premier signal d'erreur de navigation ($\hat{e}_{INS}$) au système de mesure inertiel (210) pour ajuster les données de navigation estimée ($S_{nav}$), **caractérisé en ce que** l'appareil (200) comprend :

une unité de modélisation du véhicule (220) adaptée pour recevoir :

les données de navigation estimée ($S_{nav}$), et
un vecteur de modèle ($\overline{M}$) décrivant les comportements dynamiques du véhicule (110), et

sur la base du vecteur de modèle ($\overline{M}$), des données de navigation estimée ($S_{nav}$) et au moins d'un modèle adaptatif ($M_t$, $M_a$) pour produire un second vecteur d'accélération estimée ($a_e$) pour le véhicule (110) ; et
l'unité d'estimation d'erreur (250) est adaptée pour :

produire le premier signal d'erreur de navigation ($\hat{e}_{INS}$) sur la base du second vecteur d'accélération estimée ($a_e$),
produire un second signal d'erreur de navigation ($\hat{e}_{mod}$) sur la base des premier et second vecteurs d'

accélération estimée ($a_m$, $a_e$), et

renvoyer le second signal d'erreur de navigation ($\hat{e}_{mod}$) à l'unité de modélisation du véhicule (220) pour mettre à jour le au moins un modèle adaptatif ($M_t$, $M_a$).

2. Appareil (200) selon la revendication 1, **caractérisé en ce qu'**au moins un modèle adaptatif comprend :

un modèle de poussée ($M_t$) décrivant un comportement d'un système de propulsion du véhicule (110), et

un modèle aérodynamique ($M_a$) décrivant les propriétés aérodynamiques du véhicule (110).

3. Appareil (200) selon la revendication 2, dans lequel le véhicule (110) est un aéronef, **caractérisé en ce que** le vecteur de modèle ($\overline{M}$) comprend des données décrivant au moins l'un des : angles des volets, angles d'élévation, angles de gouvernail, angles de déporteur ou poussées des moteurs du véhicule (110) et une température de l'air ambiant ou une pression de l'air ambiant.

4. Appareil (200) selon l'une quelconque des revendications précédentes, **caractérisé en ce qu'**il comprend une unité d'estimation du vent (230) adaptée pour estimer un vecteur de vent ($\overline{W}^n$) décrivant un vent essuyé par le véhicule (110) ; et l'unité de modélisation du véhicule (220) est adaptée pour recevoir le vecteur de vent ($\overline{W}^n$) et pour produire le second vecteur d'accélération estimée ($a_e$) sur la base du vecteur de vent ($\overline{W}^n$).

5. Appareil (200) selon la revendication 4, **caractérisé en ce que** l'unité d'estimation d'erreur (250) est adaptée pour:

produire un troisième signal d'erreur de navigation ($\hat{e}_w$) sur la base des premier et second vecteurs d'accélération estimée ($a_m$, $a_e$), et

renvoyer le troisième signal d'erreur de navigation ($\hat{e}_w$) à l'unité d'estimation du vent (230) pour mettre à jour le vecteur de vent estimé ($\overline{W}^n$).

6. Appareil (200) selon l'une quelconque des revendications précédentes, **caractérisé en ce que** l'appareil (200) est associé à un appareil de navigation auxiliaire (300) adapté pour transmettre au moins un signal de calibration ($h_{ajd}$, $GNSS_{adj}$) à l'unité d'estimation d'erreur (250), et l'unité d'estimation d'erreur (250) est adaptée pour ajuster les premier et second signaux d'erreur de navigation ($\hat{e}_{INS}$, $\hat{e}_{mod}$) en réponse audit au moins un signal de calibration ($h_{ajd}$, $GNSS_{adj}$).

7. Appareil (200) selon la revendication 5 en combinaison avec la revendication 6, **caractérisé en ce que** l'unité d'estimation d'erreur (250) est adaptée pour ajuster le troisième signal d'erreur de navigation ($\hat{e}_w$) en réponse audit au moins un signal de calibration ($h_{ajd}$, $GNSS_{adj}$).

8. Appareil (200) selon l'une quelconque des revendications 6 ou 7, **caractérisé en ce que** l'appareil de navigation auxiliaire (300) comprend :

un récepteur GNSS (330) adapté pour recevoir une série de signaux de navigation externes et, sur la base de ceux-ci, pour produire un premier signal de référence de source ($GNSS_s$),

une unité de prédiction (31.0) adaptée pour recevoir les données de navigation estimée ($S_{nav}$) et, sur la base de celles-ci, pour produire un premier signal de référence prédit ($GNSS_{pred}$),

une première unité de sommation (320) adaptée pour générer un premier signal de calibration ($GNSS_{adj}$) dudit au moins un signal de calibration ($h_{ajd}$, $GNSS_{adj}$) en réponse au premier signal de référence de source ($GNSS_s$) et au premier signal de référence prédit ($GNSS_{pred}$).

9. Appareil (200) selon l'une quelconque des revendications 7 ou 8, **caractérisé en ce que** l'appareil de navigation auxiliaire (300) comprend :

un altimètre (350) adapté pour générer un second signal de référence de source ($h_s$) représentant un paramètre d'élévation par rapport au véhicule (110), et

une seconde unité de sommation (340) adaptée pour générer un second signal de calibration ($h_{ajd}$) dudit au moins un signal de calibration ($h_{ajd}$, $GNSS_{adj}$) en réponse au second signal de référence de source ($h_s$) et à une estimation de l'altitude ($h_{INS}$) générée par le système de mesure inertiel (210).

10. Méthode de navigation pour générer des données de navigation estimée ($S_{nav}$) décrivant une position géographique, une vitesse et une orientation d'un véhicule (110), la méthode comprenant les étapes consistant à :

enregistrer les paramètres d'accélération et de vitesse angulaire en trois dimensions par rapport à un système de coordonnées fixé à la carrosserie (b) associé au véhicule (110),

produire un premier vecteur d'accélération estimée ($a_m$) pour le véhicule (110) sur la base des paramètres d'accélération et de vitesse angulaire,

générer les données de navigation estimée ($S_{nav}$) sur la base d'un état de navigation initial connu ($S_{nav}$') et du premier vecteur d'accélération estimée ($a_m$),

produire un premier signal d'erreur de navigation ($ê_{INS}$) au moins sur la base du premier vecteur d'accélération estimée ($a_m$) et

renvoyer le premier signal d'erreur de navigation ($ê_{INS}$) au système de mesure inertiel (210) pour ajuster les données de navigation estimée ($S_{nav}$), la méthode étant **caractérisée par** les étapes consistant à :

recevoir les données de navigation estimée ($S_{nav}$), et un vecteur de modèle ($\overline{M}$) décrivant les comportements dynamiques du véhicule (110) et

produire un second vecteur d'accélération estimée ($a_e$) pour le véhicule (110) sur la base du vecteur de modèle ($\overline{M}$), des données de navigation estimée ($S_{nav}$) et au moins d'un modèle adaptatif ($M_t$, $M_a$),

produire le premier signal d'erreur de navigation ($ê_{INs}$) sur la base du second vecteur d'accélération estimée ($a_e$),

produire un second signal d'erreur de navigation ($ê_{mod}$) sur la base des premier et second vecteurs d'accélération estimée ($a_m$, $a_e$), et

renvoyer le second signal d'erreur de navigation ($ê_{mod}$) à l'unité de modélisation du véhicule (220) pour mettre à jour le au moins un modèle adaptatif ($M_t$, $M_a$) .

11. Méthode selon la revendication 10, **caractérisée par** le au moins un modèle adaptatif comprenant:

un modèle de poussée ($M_t$) décrivant un comportement d'un système de propulsion du véhicule (110), et
un modèle aérodynamique ($M_a$) décrivant les propriétés aérodynamiques du véhicule (110).

12. Méthode selon la revendication 11, dans laquelle le véhicule (110) est un aéronef, la méthode étant **caractérisée par** le vecteur de modèle ($\overline{M}$) comprenant des données qui décrivent au moins l'un des : angles des volets, angles d'élévation, angles de gouvernail, angles de déporteur ou poussées des moteurs du véhicule (110) et une température de l'air ambiant ou une pression de l'air ambiant.

13. Méthode selon l'une quelconque des revendications 10 à 12, **caractérisée par** les étapes consistant à :

estimer un vecteur de vent ($\overline{W}^n$) qui décrit un vent essuyé par le véhicule (110) sur la base du vecteur de vitesse ($\overline{V}a^b$), et
produire le second vecteur d'accélération estimée ($a_e$) sur la base du vecteur de vent ($\overline{W}^n$)

14. Méthode selon la revendication 13, **caractérisée par** les étapes consistant à :

produire un troisième signal d'erreur de navigation ($ê_w$) sur la base des premier et second vecteurs d'accélération estimée ($a_m$, $a_e$), et
renvoyer le troisième signal d'erreur de navigation ($ê_w$) à l'unité d'estimation du vent (230) pour mettre à jour le vecteur de vent estimé ($\overline{W}^n$).

15. Méthode selon l'une quelconque des revendications 10 à 14, **caractérisée par** les étapes consistant à :

recevoir au moins un signal de calibration ($h_{ajd}$, $GNSS_{adj}$) représentant les données tirées d' au moins une source d'information qui est indépendante du véhicule (110), et
ajuster les premier et second signaux d'erreur de navigation ($ê_{INS}$, $ê_{mod}$) en réponse audit au moins un signal de calibration ($h_{ajd}$, $GNSS_{adj}$).

16. Méthode selon la revendication 14 en combinaison avec la revendication 15, **caractérisée par** l'étape consistant à ajuster le troisième signal d'erreur de navigation ($ê_w$) en réponse audit au moins un signal de calibration ($h_{ajd}$, $GNSS_{adj}$) -

17. Méthode selon l'une quelconque des revendications 15 ou 16, **caractérisée par** les étapes consistant à :

recevoir une série de signaux de navigation externes,

produire un premier signal de référence de source ($GNSS_s$) sur la base de la série de signaux de navigation externes,

produire un premier signal de référence prédit ($GNSS_{pred}$) sur la base des données de navigation estimée ($S_{nav}$), et

générer un premier signal de calibration ($GNSS_{adj}$) dudit au moins un signal de calibration ($h_{ajd}$, $GNSS_{adj}$) en réponse au premier signal de référence de source ($GNSS_s$) et au premier signal de référence prédit ($GNSS_{pred}$).

**18.** Méthode selon l'une quelconque des revendications 16 ou 17, **caractérisée par** les étapes consistant à :

générer un second signal de référence de source ($h_s$) représentant un paramètre d'élévation par rapport au véhicule (110), et

générer un second signal de calibration ($h_{ajd}$) dudit au moins un signal de calibration ($h_{adj}$, $GNSS_{adj}$) en réponse au second signal de référence de source ($h_s$) et à une estimation de l'altitude ($h_{INS}$).

**19.** Programme informatique qui peut être chargé directement dans la mémoire interne d'un ordinateur, comprenant un logiciel pour commander les étapes selon l'une quelconque des revendications 10 à 18 lorsque ledit programme est exécuté sur l'ordinateur.

**20.** Support lisible par ordinateur, ayant un programme enregistré sur celui-ci, le programme étant utilisé de sorte que l'ordinateur commande les étapes selon l'une quelconque des revendications 10 à 18.

**Fig. 1**

**Fig. 2**

**Fig. 3**

START

Receive an initial navigation state ⎯410

420⎯ Register acceleration and angular velocity parameters

Receive vehicle dynamics model vector ⎯450

430⎯ Produce 1$^{st}$ estimated acceleration vector, $a_m$

Produce 2$^{nd}$ estimated acceleration vector, $a_e$ based on adaptive vehicle model(s) ⎯460

440⎯ Generate estimated navigation data

Produce 1$^{st}$ and 2$^{nd}$ navigation error signals ⎯470

Feed back 1$^{st}$ navigation error signal for adjusting the estimated location data
and
Feed back 2$^{nd}$ navigation error signal for adjusting the adaptive vehicle model(s) ⎯480

**Fig. 4**

## REFERENCES CITED IN THE DESCRIPTION

**Patent documents cited in the description**

- CA 2465233
- US 5841537 A